Europäisches Patentamt

European Patent Office

Office européen des brevets

(11) Veröffentlichungsnummer: **0 264 564 B1**

# EUROPÄISCHE PATENTSCHRIFT

(45) Veröffentlichungstag der Patentschrift: **11.11.92**

(21) Anmeldenummer: **87111777.6**

(22) Anmeldetag: **13.08.87**

(51) Int. Cl.⁵: **G01K 7/22**, H01L 21/76

(54) **Silizium-Temperatursensor.**

(30) Priorität: **30.09.86 DE 3633230**

(43) Veröffentlichungstag der Anmeldung:
**27.04.88 Patentblatt 88/17**

(45) Bekanntmachung des Hinweises auf die
Patenterteilung:
**11.11.92 Patentblatt 92/46**

(84) Benannte Vertragsstaaten:
**DE FR GB IT NL**

(56) Entgegenhaltungen:
**EP-A- 0 028 387**
**DE-A- 2 718 781**
**GB-A- 2 097 188**
**US-E- 31 580**

(73) Patentinhaber: **SIEMENS AKTIENGESELL-**
**SCHAFT**
**Wittelsbacherplatz 2**
**W-8000 München 2(DE)**

(72) Erfinder: **Reichert, Hansjörg, Dr., Dipl.-Phys.**
**Weissenseestrasse 83**
**W-8000 München 80(DE)**

## Beschreibung

Die Erfindung betrifft einen Silizium-Temperatursensor nach dem Spreading-Resistance-Prinzip nach dem Oberbegriff des Anspruchs 1.

Ein derartiger Temperatursensor, der nach dem Stromausbreitungsprinzip arbeitet, geht aus dem Dokument EP-A-0 028 387 als bekannt hervor.

Ferner ist aus dem Dokument GB-A-2 097 188 ein Feldeffekttransistor bekannt, der nach dem Prinzip der statischen Induktion arbeitet und eine relativ kurze, hochohmige Kanalzone aufweist.

Bei Silizium-Temperatursensoren nach dem Spreading-Resistance-Prinzip werden eine möglichst enge Toleranz im Widerstandswert und eine gute Langzeitstabilität erwartet. Dabei ergeben sich jedoch technologisch widersprüchliche Forderungen.

Gemäß einer ersten Forderung muß die Fertigungstoleranz des Kontaktlochdurchmessers, der gemäß dem Spreading Resistance-Prinzip den Widerstandswert des Temperatursensors bestimmt, möglichst eng sein. Beispielsweise läßt eine Widerstandstoleranz von 2 % bei einem 7 $\Omega$ cm-Material einen Geometriespielraum von 0,25 micm zu. Ein 7 $\Omega$ cm-Material ist bezüglich des Temperaturkoeffizienten optimal für einen Temperatursensor der eingangs genannten Art und kann nicht zugunsten einer größeren Strukturungenauigkeit variiert werden. Die Fertigungstoleranz des Kontaktlochdurchmessers hängt mit der Schichtdicke der bei einem Temperatursensor der eingangs genannten Art verwendeten Isolierschicht zusammen, da die Ätztoleranz alleine bereits in der Größenordnung der Schichtdicke der verwendeten Isolierschicht liegt. Die Forderung nach einer geringen Widerstandstoleranz bedeutet daher eine Forderung nach einer dünnen Isolierschicht.

Gemäß einer zweiten Forderung sollte aus Zuverlässigkeitsgründen die bei einem Temperatursensor der eingangs genannten Art verwendete Isolierschicht im Gegensatz zu der erstgenannten Forderung möglichst dick sein. Eine dicke Isolierschicht bei einem Temperatursensor der eingangs gegenannten Art ermöglicht, daß die Einsatzspannung für eine Inversion der Silizium-Grenzfläche, die zur Isolierschicht des Temperatursensors benachbart ist, in solche Spannungsbereiche verschoben wird, welche deutlich über der Betriebsspannung des Temperatursensors liegen. Diese zweite Forderung gilt insbesondere für die unmittelbare Nähe eines Kontaktloches des Temperatursensors, da in der Nähe eines Kontaktloches eine Inversionsschicht den Widerstandswert des Temperatursensors besonders stark beeinflußt.

Bei Verwendung einer dicken Isolierschicht muß die Kante dieser dicken Isolierschicht in der Umgebung eines Kontaktloches schräg verlaufen, weil sonst eine zuverlässige Metallisierung des Kontaktes nicht gewährleistet ist. Infolge der schrägen Kante kann es in Kontaktlochnähe wegen der stetig dünner werdenden Isolierschicht zu Inversionen in der Silizium-Grenzfläche kommen, was zu Sensor-Instabilitäten führt. So kann bei einer Fertigungstechnik nach dem Stand der Technik die Langzeitdrift bei einem Temperatursensor ca. 0,5 % betragen.

Störend wirkt sich auch die Widerstandserhöhung des Temperatursensors aus, die beim Zersägen einer Silizium-Halbleiterscheibe auftritt. Ein Widerstandsvorhalt von ca. 30 Ohm ist beim Stand der Technik daher erforderlich.

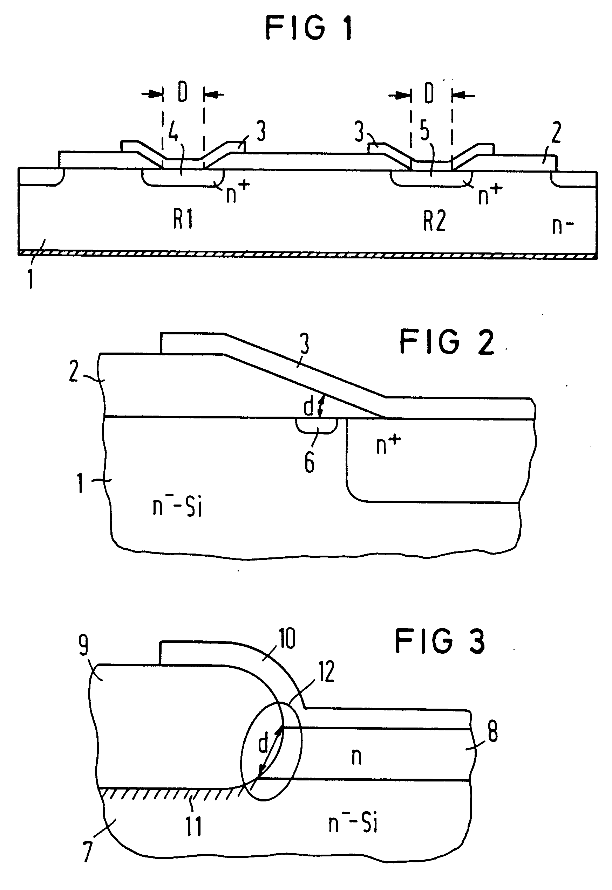

Die geschilderten Schwierigkeiten sind bisher nicht befriedigend gelöst. Beim Stand der Technik wird eine Konstruktion verwendet, wie sie in den FIG 1 und 2 dargestellt ist. Mit Hilfe einer großen Unterdiffusion im Bereich eines Kontaktloches wird beim Stand der Technik versucht, eine lokale Inversion in der Silizium-Grenzfläche zu unterdrücken. Da eine schräge Ätzung der Isolierschicht in der unmittelbaren Umgebung eines Kontaktloches jedoch relativ undefiniert ist, können unerwünschte Effekte in der Umgebung eines Kontaktloches nicht vollständig vermieden werden. Stabilitätsprobleme sind dabei die Folge.

Der vorliegenden Erfindung liegt die Aufgabe zugrunde, einen Silizium-Temperatursensor der eingangs genannten Art anzugeben, der eine verbesserte Stabilität und eine geringe Fertigungstoleranz eines Kontaktlochdurchmessers ermöglicht.

Diese Aufgabe wird durch einen Silizium-Temperatursensor nach dem Anspruch 1 gelöst.

Ausgestaltungen und Vorteile der Erfindung sind in den Unteransprüchen, in der Beschreibung und in der Zeichnung dargestellt.

Die Anwendung der Locos-Technik ist einem Fachmann wohl vertraut. Beispielsweise ist die Anwendung der Locos-Technik in der US-Patentschrift 3 544 858 beschrieben.

Durch Anwendung der Locos-Technik, wie sie auch z.B. bei integrierten Schaltungen verwendet wird, lassen sich gleichzeitig Strukturtreue bei geringen Fertigungstoleranzen und eine dicke Isolierschicht, beispielsweise eine dicke Oxidschicht, verwirklichen, da bei Anwendung der Locos-Technik nur eine 0,1 micm dicke Oxidationsmaske, beispielsweise eine Nitridschicht, strukturiert werden muß. Die Struktur der Oxidschicht wird auch bei einer großen Oxiddicke bei Anwendung des Locos-Prozesses exakt definiert. Bei Anwendung des Locos-Prozesses ergibt sich auch eine günstige Kantenform ("Vogelschnabel") in der unmittelbaren Umgebung eines Kontaktloches, welche Kantenform reproduzierbar durch die Unteroxidation der Nitridschicht entsteht. Zusätzlich entsteht bei Anwendung des Locos-Prozesses eine SiliziumMesa-Struktur im Kontaktloch.

Wird die Kontaktloch-Diffusion bis an die Unterkante der Oxidschicht geführt, so ist das inversionsgefährdete hochohmige Silizium um mehr als die halbe Dicke der Oxidschicht von der spannungsführenden Metallisierung des Kontaktloches entfernt. Lokale Unterschreitungen der Oxiddicke sind mit Sicherheit ausgeschlossen. Wird die Locos-Oxid-Dicke so dimensioniert, daß im kritischen Bereich 12 in FIG 3 die zu einer Inversion der Silizium-Grenzfläche bei Betriebsspannung führende Isolierschicht-Dicke deutlich überschritten wird, was bei Verwendung der Locos-Technik nicht mit größeren Geometrietoleranzen erkauft werden muß, so lassen sich bei einem Temperatursensor lokale Inversionsschichten sicher vermeiden.

Bei geeigneter Ausführung des Locos-Prozesses bewirkt der bei der Oxidation erzeugte "pile-up" bei dem üblicherweise verwendeten phosphordotierten Silizium eine zusätzliche Stabilisierung, da die Phosphorkonzentration der Silizium-Grenzschicht durch diesen Effekt auf das ca. Doppelte angehoben wird. Dadurch ergibt sich eine zusätzliche Erhöhung der Einsatzspannung, was grundsätzlich hilfreich ist, was aber bei einem Temperatursensor nach der Erfindung als Maßnahme nicht unbedingt erforderlich ist.

Das Problem des Sägevorhaltes kann durch einen Kurzschlußrahmen, der parallel zum Sägerahmen des Temperatursensors verläuft, deutlich verbessert werden. Dadurch ergibt sich ein zusätzlicher Stabilitätsgewinn, da Mikrorisse, die infolge des Sägens einer Halbleiterscheibe entstehen können, den Sensorwiderstand nicht verändern können.

Die Erfindung wird im folgenden anhand der Zeichnung näher erläutert.

FIG 1 und 2    beschreiben einen Silizium-Temperatursensor nach dem Stand der Technik.

FIG 3 bis 5    beschreiben einen Temperatursensor nach der Erfindung.

FIG 1 und 2 zeigen einen Silizium-Temperatursensor nach dem Stand der Technik. Das Substrat 1 dieses Silizium-Temperatursensors ist $n^-$-dotiert und besitzt eine spezifischen Widerstand $\rho$ von 7 Ω cm. Im Bereich der Kontaktlöcher 4, befinden sich $n^+$-leitende Bereiche 17, die durch Kontaktdiffusion entstanden sind. Die als Oxidschicht 2 ausgebildete Isolierschicht besitzt in der unmittelbaren Umgebung der Kontaktlöcher 4, 5 schräge Kanten, damit eine zuverlässige Metallisierung 3 gewährleistet ist. Die Kontaktlöcher 4, 5 besitzen jeweils einen Durchmesser D. Die Oxidschicht 2 besitzt eine Dicke von etwa 0,8 micm. Aufgrund der Kantenschräge der Oxidschicht 2 in der unmittelbaren Umgebung der Kontaktlöcher 4, 5 kann es in Kontaktlochnähe wegen der stetig dünner werdenden Isolierschicht 2 zu Inversionen kommen. Durch eine große Unterdiffusion bei der Ausbildung der Kontaktdiffusions-Bereiche 17 wird versucht, eine lokale Inversion zu unterdrücken. Da Schrägätzungen relativ undefiniert sind, können im Bereich der inversionsgefährdeten Stelle 6 (FIG 2) unerwünschte Effekte nicht vollständig vermieden werden. Die inversionsgefährdete Stelle 6 ist an der Grenzfläche zwischen $n^-$-leitendem Substrat 1 und der Oxidschicht 2 unmittelbar dem Kontaktdiffusions-Bereich 17 benachbart und besitzt zur Metallisierung 3 einen Abstand d.

Das Kontaktloch 4 besitzt einen Widerstand R1 und das Kontaktloch 5 besitzt einen Widerstand R2. Der Gesamtwiderstand R des Silizium-Temperatursensors ergibt sich als Summe aus den Widerstandswerten R1 und R2. Die Widerstandswerte R1 und R2 ergeben sich jeweils als Quotient aus dem spezifischen Widerstand des Silizium-Substrats 1 und dem Produkt aus der Kreiszahl $\pi$ und dem Durchmesser D der Kontaktlöcher 4, 5.

Die bei einem Silizium-Temperatursensor nach dem Stand der Technik vorhandene Instabilität läßt sich nicht durch eine dickere Oxidschicht 2 vermeiden. Diese Instabilität hängt nur von der Kantenschräge der Oxidschicht 2 im unmittelbaren Bereich der Kontaktlöcher 4, 5 und dem Ausmaß der Unterdiffusion bei den Kontaktdiffusions-Bereichen 17 ab.

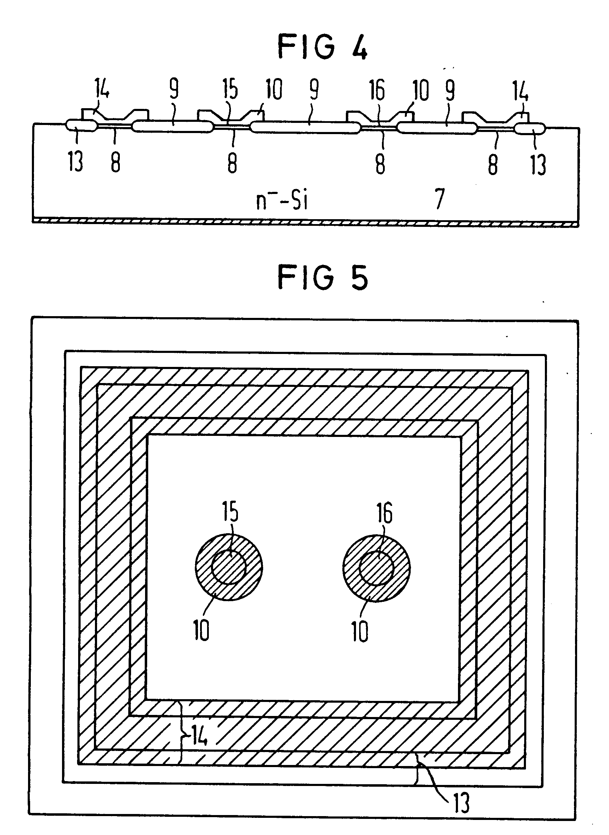

Die FIG 3 bis 5 zeigen einen Silizium-Temperatursensor nach der Erfindung.

Durch Anwendung der Locos-Technik lassen sich gleichzeitig Strukturtreue und eine dicke Oxidschicht 9 verwirklichen, da bei Anwendung der Locos-Technik nur eine 0,1 micm dicke Nitridschicht strukturiert werden muß. Die Oxidschicht 9 kann etwa 1,5 micm dick sein. Bei der Oxidschicht 9 ergibt sich eine günstige Kantenform, die reproduzierbar durch die Nitrid-Unteroxidation entsteht. Zusätzlich entsteht eine Silizium-Mesa-Struktur im Bereich der Kontaktlöcher 15, 16. Wird die Kontaktlochdiffusion im Bereich 8 bis an die Unterkante der Oxidschicht 9 geführt, so ist der inversionsgefährdete Bereich 12 an der Grenzfläche des hochohmigen, $n^-$-dotierten Silizium-Substrats 7 um mehr als die halbe Oxiddicke von der spannungsführenden Metallisierung 10 entfernt. Der kritische, inversionsgefährdete Bereich 12 an der Grenzfläche des hochohmigen Silizium-Substrats 7 besitzt zur Metallisierung 10 einen Abstand d. Wenn dieser Abstand d den Wert dk einnehmen würde, so ergäbe sich bei Betriebsspannung eine Inversion im kritischen Bereich 12. Wird die Dicke der Oxidschicht 9 so dimensioniert, daß der aktuelle Abstand d des kritischen Bereiches 12 zur Metallisierung 10 den kritischen Wert dk, der eine Inversion bei Betriebsspannung ergeben würde, deutlich überschreitet, so lassen sich lokale Inversionsschichten auch im kritischen, inversionsgefährdeten Bereich 12 mit Sicherheit ausschließen. Diese Sicherheit vor einer Inversion muß bei einem Temperatursensor nach der Erfindung nicht mit größeren Geometrie-Toleranzen erkauft werden.

Der maximale Wert für den Abstand d des kritischen, inversionsgefährdeten Bereiches 12 zur Metallisierung 10 läßt sich durch die Dicke der Locos-Oxidschicht 9 definiert einstellen. Bei gegebener Dicke der Oxidschicht 9 ist der Abstand d schließlich durch die Tiefe der Kontaktdiffusion im Bereich der Kontaktlöcher 15, 16 definiert. Wenn die Kontaktlochdiffusion bis an die Oxidunterkante geführt ist, ist der inversionsgefährdete Bereich 12 um mehr als die halbe Oxiddicke von der spannungsführenden Metallisierung 10 entfernt. Im Ausführungsbeispiel nach FIG 3 ist der Abstand d gleich der Gesamtdicke des Oxids 2 in FIG 2, das bedeutet einen Abstand d von etwa 0,8 micm. Der Abstand d in FIG 3 ist damit deutlich größer als der Abstand d in FIG 2 bei einem Temperatursensor nach dem Stand der Technik.

Eine dicke, mittelohmige Kontaktdiffusions-Schicht 8 (Dotierungskonzentration von ungefähr $10^{16}\,\mathrm{cm}^{-3}$ bis $10^{18}\,\mathrm{cm}^{-3}$) wirkt als kontinuierlich verteilter Vorschaltwiderstand gegen das Auftreten von "hot spots". Solche "hot spots" könnten sich, ausgehend vom kritischen, Rand-bereich 12, wo wegen der Randkrümmung eine Durchbruchgefahr gegeben ist, in Durchschmelzbereichen ausbilden.

Bei geeigneter Prozeßführung bewirkt der bei der Locos-Oxidation erzeugte pile-up in der pileup-Zone 11 in der Grenzfläche des Siliziumsubstrats 7 bei dem üblicherweise verwendeten phosphor-dotierten Silizium eine zusätzliche Stabilisierung, da die Phosphorkonzentration der Silizium-Grenzschicht auf das ca. Doppelte angehoben wird. Dadurch ergibt sich eine zusätzliche Erhöhung der Einsatzspannung für die Inversion, was grundsätzlich hilfreich ist, aber bei einem Temperatursensor nach den FIG 3 bis 5 nicht unbedingt erforderlich ist.

Das Problem des Sägevorhaltes wird durch einen Kurzschlußrahmen 14, der parallel zum Sägerahmen verläuft, deutlich verbessert.

Der Temperatursensor nach den FIG 3 bis 5 besitzt einen Chipping-Stopper-Rahmen 13 ebenfalls aus Locos-Oxid, das bei erhöhter Temperatur auf dem Substrat 7 erzeugt worden ist. Dieser Chipping-Stopper-Rahmen 13 sorgt dafür, daß beim Sägen einer Halbleiterscheibe eventuell entstehende Ausbrüche an der Oxidkante des Rahmens 13 gestoppt werden, da die Druckkräfte, die beim Sägen der Halbleiterscheibe entstehen und die beim Überschreiten eines kritischen Wertes zu mechanischer Kristallzerstörung infolge von Muschelausbrüchen (Chippage) führen, durch die Zugkräfte des thermischen Oxides des Rahmens 13 kompensiert werden.

Auch im Bereich des Kurzschlußrahmens 14 befinden sich Kontaktdiffusionsbereiche 8 zwischen den verschiedenen Oxidbereichen 9 und 13.

Der Kurzschlußrahmen 14 kann metallisch oder aus einem sonstigen Leiter, beispielsweise aus Poly-Silizium, hergestellt werden. Die Kontakte 10 können ebenfalls sowohl aus Metall als auch aus anderen leitenden Materialien, beispielsweise aus Poly-Silizium, hergestellt werden.

## Patentansprüche

1. Silizium-Temperatursensor nach dem Spreading-Resistanc-Prinzip, mit einem schwach dotierten Silizium-Substrat (7) und mit zwei elektrischen Kontakten (10), in deren Bereich im schwach dotierten Silizium-Substrat (7) jeweils eine stärker dotierte Kontaktzone (8) vorhanden ist, **gekennzeichnet** durch eine mit einem Locos-Prozeß hergestellte Oxidschicht (9), die die Kontaktzonen (8) umgibt, und durch eine Silizium-Mesa-Struktur in den Kontaktzonen (8).

2. Silizium-Temperatursensor nach Anspruch 1, **dadurch gekennzeichnet,** daß die Kontaktzonen (8) etwa bis zur Locos-Oxid-Unterkante geführt sind.

3. Silizium-Temperatursensor nach Anspruch 1 oder 2, **gekennzeichnet** durch Metallisierungen als elektrische Kontakte (10).

4. Silizium-Temperatursensor nach Anspruch 1 oder 2, **gekennzeichnet** durch elektrische PolySilizium-Kontakte (10).

5. Silizium-Temperatursensor nach einem der Ansprüche 1 bis 4, **dadurch gekennzeichnet,** daß die Kontaktzonen (8) hochohmig als kontinuierlich verteilte Vorschaltwiderstände gegen die Bildung von Durchschmelzbereichen ("hot spots") ausgebildet sind.

6. Silizium-Temperatursensor nach einem der Ansprüche 1 bis 5, **dadurch gekennzeichnet,** daß die Locos-Oxid-Schicht (9) dicker als ein Mikrometer ist.

7. Silizium-Temperatursensor nach Anspruch 6, **dadurch gekennzeichnet**, daß die Locos-Oxid-Schicht dicker als 1,4 micm ist.

8. Silizium-Temperatursensor nach einem der Ansprüche 1 bis 7, **gekennzeichnet** durch einen Kurzschlußrahmen (14) um die elektrischen Kontakte (10) und das diese elektrische Kontakte (10) umgebende Locos-Oxid (9) herum.

9. Silizium-Temperatursensor nach Anspruch 8, **gekennzeichnet** durch einen Chippage-Stopper-Rahmen (13) um den Kurzschlußrahmen (14) herum.

10. Silizium-Temperatursensor nach einem der Ansprüche 1 bis 9, **dadurch gekennzeichnet,** daß der Abstand (d) eines elektrischen Kontaktes (10) zum schwach dotierten Silizium-Substrat (7) im Bereich der Grenzfläche zwischen Locos-Oxid (9) und der zugehörigen Kontaktzone (8) größer als die halbe Dicke der Locos-Oxid-Schicht (9) ist.

11. Silizium-Temperatursensor nach einem der Ansprüche 1 bis 10, **dadurch gekennzeichnet,** daß der Abstand (d) zwischen einem elektrischen Kontakt (10) und dem schwach dotierten Silizium-Substrat (7) entlang der Grenzfläche zwischen dem Locos-Oxid (9) und der zugehörigen Kontaktzone (8) durch die Dicke des Locos-Oxids (9) eingestellt ist.

12. Silizium-Temperatursensor nach einem der Ansprüche 1 bis 11, **dadurch gekennzeichnet,** daß der Abstand (d) zwischen einem elektrischen Kontakt (10) und dem schwach dotierten Silizium-Substrat (7) entlang der Grenzfläche zwischen dem Locos-Oxid (9) und der zugehörigen Kontaktzone (8) durch die Tiefe der Kontaktdiffusion eingestellt ist.

13. Silizium-Temperatursensor nach einem der Ansprüche 1 bis 12, **dadurch gekennzeichnet,** daß das schwach dotierte Silizium-Substrat (7) phosphordotiert ist und im Grenzbereich (11) zum Locos-Oxid (9) hin die doppelte Phosphorkonzentration gegenüber den übrigen Bereichen des Silizium-Substrats (7) aufweist.

**Claims**

1. Silicon temperature sensor based on the spreading-resistance principle having a lightly doped silicon substrate (7) and having two electrical contacts (10) in whose vicinity a more heavily doped contact zone (8) is in each case present in the lightly doped silicon substrate (7), characterised by an oxide layer (9) which is produced using a LOCOS process and which surrounds the contact zones (8), and by a silicon mesa structure in the contact zones (8).

2. Silicon temperature sensor according to Claim 1, characterised in that the contact zones (8) are extended approximately up to the bottom edge of the LOCOS oxide.

3. Silicon temperature sensor according to Claim 1 or 2, characterised by metallisations as electrical contacts (10).

4. Silicon temperature sensor according to Claim 1 or 2, characterised by electrical polysilicon contacts (10).

5. Silicon temperature sensor according to one of Claims 1 to 4, characterised in that the contact zones (8) are constructed in high-resistance form as continuously distributed series resistances to prevent the formation of fusion regions ("hot spots").

6. Silicon temperature sensor according to one of Claims 1 to 5, characterised in that the LOCOS oxide layer (9) is thicker than one micrometre.

7. Silicon temperature sensor according to Claim 6, characterised in that the LOCOS oxide layer is thicker than 1.4 $\mu$m.

8. Silicon temperature sensor according to one of Claims 1 to 7, characterised by a short-circuit frame (14) around the electrical contacts (10) and the LOCOS oxide surrounding said electrical contacts (10).

9. Silicon temperature sensor according to Claim 8, characterised by a chipping-prevention frame (13) around the short-circuit frame (14).

10. Silicon temperature sensor according to one of Claims 1 to 9, characterised in that the distance (d) of an electrical contact (10) from the lightly doped silicon substrate (7) is greater than half the thickness of the LOCOS oxide layer (9) in the region of the interface between LOCOS oxide (9) and the associated contact zone (8).

11. Silicon temperature sensor according to one of Claims 1 to 10, characterised in that the distance (d) between an electrical contact (10) and the lightly doped silicon substrate (7) is adjusted by the thickness of the LOCOS oxide (9) along the interface between the LOCOS oxide (9) and the associated contact zone (8).

12. Silicon temperature sensor according to one of Claims 1 to 11, characterised in that the distance (d) between an electrical contact (10) and the lightly doped silicon substrate (7) is adjusted by the depth of the contact diffusion along the interface between the LOCOS oxide (9) and the associated contact zone (8).

13. Silicon temperature sensor according to one of Claims 1 to 12, characterised in that the lightly doped silicon substrate (7) is phosphorus-doped and has double the phosphorous concentration in the region (11) of the boundary with the LOCOS oxide (9) compared with the remaining regions of the silicon substrate (7).

**Revendications**

1. Capteur de température au silicium suivant le principe de spreading-resistance comprenant un substrat (7) en silicium faiblement dopé et deux contacts (10) électriques dans la région desquels il est prévu, dans le substrat (7) en silicium faible dopé, respectivement une zone de contact (8) fortement dopée, caractérisé par une couche d'oxyde (9) fabriquée par le processus Locos et entourant les zones de contact (8) et par une structure mésa en silicium dans les zones de contact (8).

2. Capteur de température au silicium suivant la revendication 1, caractérisé en ce que les zones de contact (8) mènent à peu près jusqu'à l'arête inférieure de l'oxyde Locos.

3. Capteur de température au silicium suivant la revendication 1 ou 2, caractérisé par des métallisations servant de contacts (10) électriques.

4. Capteur de température au silicium suivant la revendication 1 ou 2, caractérisé par des contacts (10) électriques en polysilicium.

5. Capteur de température au silicium suivant la revendication 1 à 4, caractérisé en ce que les zones de contact (8) à forte valeur ohmique sont constituées sous la forme de résistances d'appoint réparties d'une manière continue et s'opposant à la formation de zones de fusion ("hot spots").

6. Capteur de température au silicium suivant la revendication 1 à 5, caractérisé en ce que la couche d'oxyde Locos (9) est plus épaisse qu'un micron.

7. Capteur de température au silicium suivant la revendication 6, caractérisé en ce que la couche d'oxyde Locos est plus épaisse que 1,4 micm.

8. Capteur de température au silicium suivant la revendication 1 à 7, caractérisé par un cadre (14) de court-circuit autour des contacts (10) électriques et autour de l'oxyde Locos entourant ces contacts (10) électriques.

9. Capteur de température au silicium suivant la revendication 8, caractérisé par un cadre (13) chippage-stopper autour du cadre (14) de court-circuit.

10. Capteur de température au silicium suivant la revendication 1 à 9, caractérisé en ce que la distance entre un contact (10) électrique et le substrat (7) en silicium faiblement dopé dans la région de l'interface entre l'oxyde de Locos (9) et la zone de contact (8) qui lui correspond est supérieure à la moitié de l'épaisseur de la couche d'oxyde de Locos (9).

11. Capteur de température au silicium suivant la revendication 1 à 10, caractérisé en ce que la distance (d) entre un contact (10) électrique et le substrat (7) en silicium faiblement dopé le long de l'interface entre l'oxyde de Locos (9) et la zone de contact (8) qui lui correspond, est réglée par l'épaisseur de l'oxyde de Locos (9).

12. Capteur de température au silicium suivant la revendication 1 à 11, caractérisé en ce que la distance (d) entre un contact (10) électrique et le substrat (7) en silicium faiblement dopé le long de l'interface entre l'oxyde de Locos (9) et la zone de contact (8) qui lui correspond, est réglée par la profondeur de la diffusion du contact.

13. Capteur de température au silicium suivant la revendication 1 à 12, caractérisé en ce que le substrat (7) en silicium faiblement dopé est dopé au phosphore et dans la région voisine (11) de l'oxyde Locos (9) et la concentration de phosphore dans la région voisine (11) de l'oxyde Locos (9) est le double de celle dans les autres régions du substrat (7) en silicium.

# FIG 1

# FIG 2

# FIG 3

# FIG 4

n⁻-Si

# FIG 5